# FASCICULE DE BREVET EUROPEEN

(11) **EP 0 405 678 B1**
(45) Date de publication et mention de la délivrance du brevet: **31.05.1995**
(21) Numéro de dépôt: 90201662.5
(22) Date de dépôt: 25.06.1990
(51) Int. Cl.: G01S 3/784, G01S 3/781

(54) **Senseur d'horizon terrestre à précision améliorée**
Erd-Horizontsensor mit verbesserter Genauigkeit
Horizon sensor with improved precision

(30) Priorité: 30.06.1989 FR 8908798
(43) Date de publication de la demande: 02.01.1991
(73) Titulaire: SOCIETE ANONYME D'ETUDES ET REALISATIONS NUCLEAIRES - SODERN, 94450 Limeil Brevannes (FR); Philips Electronics N.V., 5621 BA Eindhoven (NL)
(72) Inventeur: Bourcier, Henri, Societé Civile S.P.I.D., F-75007 Paris (FR); Pezant, Christian, Societé Civile S.P.I.D., F-75007 Paris (FR); Tissot, Maurice, Societé Civile S.P.I.D., F-75007 Paris (FR)
(74) Mandataire: Pyronnet, Jacques

(56) Documents cités:
- EP-A- 0 135 065
- FR-A- 2 533 883
- FR-A- 2 551 201
- FR-A- 2 555 312
- FR-A- 2 625 396
- US-A- 3 304 425
- US-A- 4 388 646
- US-A- 4 424 943
- US-A- 4 796 187

## Description

La présente invention concerne un senseur d'horizon terrestre utilisant des éléments photosensibles à transfert de charges pour détecter les transitions entre la Terre et l'espace sur une image mettant en oeuvre, dans le domaine allant du proche infrarouge à l'ultraviolet, le rayonnement solaire réfléchi par la Terre, ainsi que le rayonnement solaire diffusé par l'atmosphère terrestre.

L'invention trouve une application particulièrement avantageuse dans le domaine du contrôle d'attitude par rapport à la Terre des satellites artificiels géostationnaires.

Pour orienter de manière précise vers des zones particulières de la Terre les antennes directives dont sont munis les satellites artificiels, ceux-ci sont équipés de capteurs d'attitude mesurant leur orientation par rapport à des corps célestes (Terre, Soleil, étoiles), et de dispositifs permettant de modifier cette orientation. Les capteurs susceptibles de mesurer l'attitude d'un satellite par rapport à la Terre fonctionnent, compte-tenu du diamètre apparent de la Terre, sur le principe de la mesure de l'horizon terrestre, c'est-à-dire de la transition entre la Terre et l'espace.

On connaît de l'état de la technique, par exemple du brevet américain n° 3 118 063, des senseurs d'horizon terrestre utilisant des détecteurs sensibles au rayonnement infrarouge, tels que les thermopiles ou les bolomètres. Ce type de senseur connu est formé par quatre détecteurs montés en croix. Une paire de détecteurs diamétralement opposés constitue une direction sensible et toute modification de l'attitude du satellite selon cette direction provoque une augmentation de la surface recouverte par l'image de la Terre pour un détecteur, et une diminution pour l'autre détecteur, alors que pour un alignement parfait du satellite, les surfaces recouvertes sont égales. D'une façon générale, les signaux électriques des deux détecteurs sont combinés en opposition, et après amplification, le signal résultant est appliqué à un correcteur d'attitude. Pour un rayonnement de la Terre uniforme, avec des détecteurs de caractéristiques identiques, le signal est en principe nul pour un dépointage nul.

Dans le cas de l'utilisation de détecteurs sensibles dans l'infrarouge, on limite généralement la bande spectrale à une bande d'émission d'un gaz naturellement présent dans l'atmosphère, telle que la bande d'émission du gaz carbonique centrée autour de 15 »m. Ceci présente l'intérêt de masquer le rayonnement issu du sol et des basses couches atmosphériques dont les variations sont préjudiciables à la précision de la mesure. L'expérience acquise avec ce type de détecteur et les perfectionnements qui y ont été apportés permettent de penser qu'il est difficile d'améliorer sensiblement leurs performances.

C'est pour remédier aux difficultés liées à la faible précision de la détection du rayonnement infrarouge émis par la Terre que la Demanderesse a proposé, dans le brevet français n° 2 533 883, un nouveau procédé de mesure d'attitude d'un satellite par rapport à la Terre, dont les principales caractéristiques sont l'utilisation d'éléments photosensibles fonctionnant dans la bande spectrale visible, et l'utilisation d'éléments photosensibles constitués par des dispositifs à transfert de charges. A partir de la position de 8 éléments photosensibles situés à la transition Terre-espace et appartenant à 8 barrettes de détecteurs disposées en croix, ce senseur d'horizon terrestre connu permet de déterminer le centre du disque terrestre et donc l'attitude du satellite par rapport à la Terre.

Ce type de senseur présente cependant l'inconvénient que la précision de la mesure obtenue est relativement faible compte tenu du nombre très limité de points de transition détectés, et que, par ailleurs, des dépointages importants conduisent à une dégradation sensible de la mesure en bord de champ.

Aussi, le problème technique à résoudre par l'objet de la présente invention est de réaliser un senseur d'horizon terrestre conforme au préambule qui présenterait globalement une précision de mesure accrue et qui permettrait par ailleurs la détection de forts dépointages avec une précision indépendante de la valeur du dépointage.

La solution au problème technique posé consiste, selon la présente invention, en ce que, lesdits éléments photosensibles à transfert de charges étant constitués en une matrice bidimensionnelle de détecteurs élémentaires, des moyens de lecture déterminent les coordonnées des détecteurs élémentaires situés auxdites transitions Terre-espace, en ce que lesdits moyens de lecture disposent de moyens de masquage pour éliminer les signaux provenant des détecteurs élémentaires contenus dans une sous-matrice entourant l'image du soleil lorsque celle-ci se forme sur la matrice de détecteurs élémentaires, et en ce que des moyens de lecture en déduisant la position du centre de la Terre dans le référentiel de la matrice.

On notera que, du document FR-A- 2 555 312, il est déjà connu un capteur statique d'horizon terrestre, utilisable dans l'infrarouge, constitué d'une matrice bidimensionnelle de thermopiles.

Ainsi, à l'aide d'une optique focalisation connue en soi, on forme une image de la Terre et de son halo sur une matrice à transfert de charges composée d'un très grand nombre de détecteurs élémentaires disposés selon un arrangement régulier de lignes et de colonnes. (A titre d'exemple, le composant commercialisé par la société Thomson-CSF sous la référence TH 7861 comporte une matrice de 288 x 384 détecteurs élémentaires). Le rayonnement reçu par l'objectif de focalisation est limité à l'aide d'un filtre optique à une bande spectrale comprise sensiblement entre 0,3 et 1 »m. La matrice est lue ligne par ligne par des moyens de lecture qui fournissent l'amplitude des signaux photoélectriques délivrés par tous les détecteurs élémentaires, ce qui permet ensuite de localiser ceux des détecteurs élémentaires appartenant à la transition Terre-espace. Connaissant ainsi la position sur la matrice de l'image de la terre entourée de son halo, il est possible à partir des points concernés traités par des moyens de calcul appropriés de trouver les coordonnés du centre de la Terre dans le référentiel de la matrice. Le grand nombre de détecteurs élémentaires impliqués dans la détermination de la transition conduit à assurer au viseur selon l'invention une très grande précision de mesure, laquelle ne dépend pas de la position de l'image de la Terre sur la matrice de détecteurs, il n'y a donc pas de perte de précision en fonction du dépointage du satellite par rapport à la Terre.

On peut encore améliorer la précision du résultat en ignorant, dans le calcul, les points dont la position paraît anormale. Pour cela il est prévu que lesdits moyens de calcul disposent de moyens de discrimination pour éliminer les détecteurs élémentaires retenus dont la distance au centre de Terre calculé est sensiblement différente du rayon du disque terrestre De manière itérative, un nouveau calcul du centre du cercle est ensuite effectué après suppression des points aberrants.

Dans certaines configurations Terre-Soleil-satellite, il peut se produire que le Soleil apparaisse dans le champ de vue du senseur. Afin d'éviter les perturbations de mesure qui en résultent, on peut utiliser au moins un des dispositifs cités dans le brevet français n° 2 533 883, à savoir :
- Un photodétecteur à transfert de charges équipé d'un dispositif d'antiéblouissement qui empêche un étalement de l'image du Soleil sur les détecteurs élémentaires environnants,
- Un dispositif électronique permettant d'ajuster le temps d'intégration des photodétecteurs de manière à éviter la saturation des puits de potentiel des détecteurs élémentaires sur lesquels est formée l'image du Soleil. Ceci est effectué en ajustant la fréquence avec laquelle la matrice photosensible délivre l'ensemble de son information (fréquence image ou fréquence de lecture),
- Un dispositif optique dont la transmission varie en relation inverse avec l'éclairement reçu, constitué par une lame de matériau photochromique placée devant l'objectif.

La description qui va suivre en regard des dessins annexés, donnés à titre d'exemples non limitatifs, fera bien comprendre en quoi consiste l'invention et comment elle peut être réalisée.

La figure 1 montre en perspective un schéma d'un senseur d'horizon terrestre selon l'invention.

La figure 2 représente une matrice à transfert de charge mise en oeuvre dans le senseur de la figure 1.

La figure 3 est un bloc-diagramme de la chaine de mesure conduisant à la détermination du centre du disque terrestre sur la matrice de la figure 2.

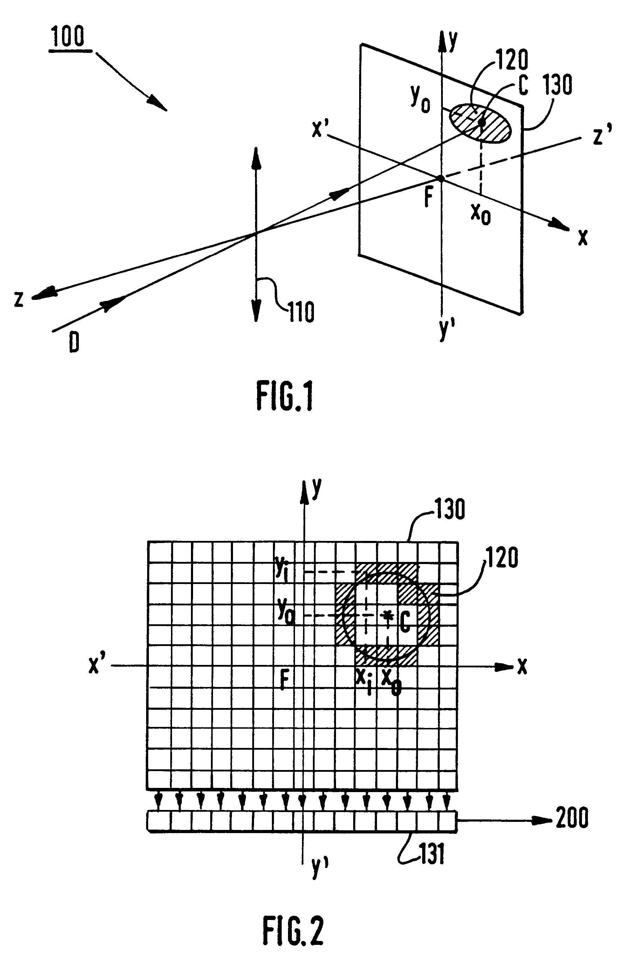

La figure 1 montre de façon schématique un viseur 100 d'horizon terrestre comportant un système optique 110 de focalisation comprenant au moins un objectif, destiné à focaliser le rayonnement solaire réfléchi par la Terre et diffusé par l'atmosphère terrestre de façon à former dans le plan focal du viseur 100 l'image 120 de la Terre et de son halo. Un filtre optique, non représenté, placé devant ledit système de focalisation permet de limiter le rayonnement reçu par le viseur à une bande spectrale comprise sensiblement entre 0,3 et 1 »m, soit entre le proche infrarouge et l'ultraviolet.

Le senseur 100 de la figure 1 est utilisé pour déterminer la direction D du centre du disque terrestre de façon à connaître l'attitude par rapport à la Terre d'un engin spatial à bord duquel est embarqué ledit senseur et ainsi d'en détecter d'éventuels dépointages. A cet effet, on recherche, dans le plan focal de l'optique 110, les coordonnées xo, yo du centre C de l'image 120 de la terre et du halo terrestre. Il existe alors une relation univoque entre la direction D et le couple {xo,yo}.

Comme le montrent les figures 1 et 2, la recherche de la position du point C dans le plan focal est réalisée en utilisant une matrice 130 d'éléments photosensibles à transfert de charges telle que la matrice TH 7861 de Thomson-CSF. De façon usuelle, la matrice 130 est lue en transférant séquentiellement ligne par ligne les signaux fournis par les éléments photosensibles dans un registre de sortie 131. Le contenu dudit registre de sortie est à son tour transféré vers des moyens 200 de lecture dans le but de déterminer les coordonnées xi, yi des éléments photosensibles, marqués en gris sur la figure 2, situés aux transitions Terre-espace. Ensuite, par un traitement approprié à l'aide de moyens de calcul décrits plus loin, on déduit de l'ensemble des couples {xi,yi} les coordonnées xo et yo du centre C du disque terrestre.

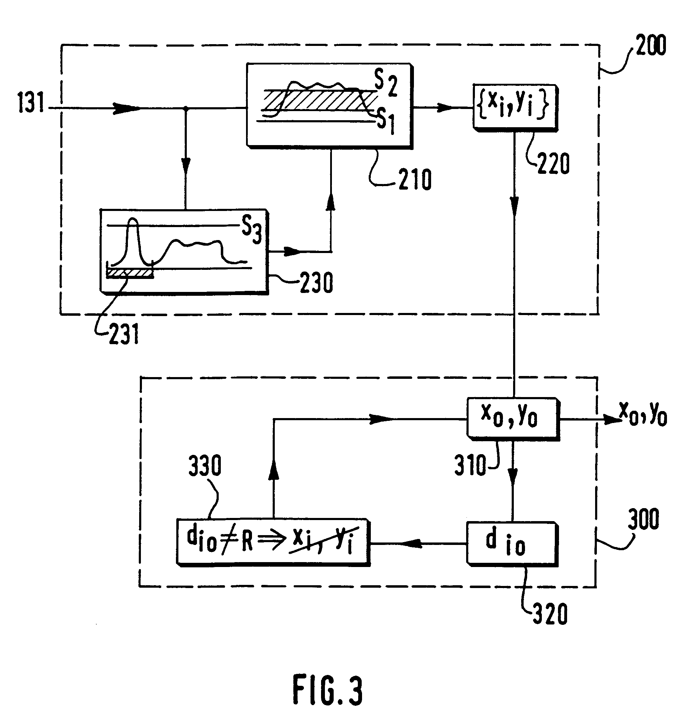

Ainsi qu'on peut le voir sur la figure 3, les signaux provenant du registre de sortie 131 de la matrice sont analysés par des moyens 200 de lecture comprenant un circuit 210 de comparaison à deux tensions S1 et S2 de référence, ou seuils. Ce circuit de comparaison ne retient les coordonnées xi, yi d'un élément photosensible donné que si le signal correspondant est compris entre les deux seuils S1 et S2. Ceci a pour effet de ne détecter que les transitions entre l'espace et la Terre et donc d'obtenir le contour de la Terre. Les coordonnées xi, yi des éléments photosensibles retenus sont stockés, par exemple, dans une mémoire 220. Il faut d'autre part signaler que, pour s'adapter aux conditions extrêmes d'illumination résultant des différentes configurations possibles entre la Terre, le Soleil et l'engin spatial, il est prévu que les seuils de détection S1 et S2 sont adaptatifs.

Les moyens 200 de lecture comportent également des moyens 230 de masquage pour éliminer les signaux des détecteurs élémentaires situés sur ou à proximité de l'image du Soleil lorsque celle-ci se forme sur la matrice 130 à transfert de charges. Il s'agit essentiellement d'un détecteur de crête de niveau S3 qui permet de répérer sur une ligne d'éléments photosensible donnée la position du Soleil et d'éliminer systématiquement en sortie de la lecture les coordonnées des éléments photosensibles compris dans une sous-matrice entourant l'image du Soleil. Pour une ligne donnée, ladite sous-matrice correspond à la zone hachurée 231 représentée sur le détecteur de crête 230.

Après avoir été stockées en mémoire, les coordonnées xi, yi des points de transition Terre-espace retenus sont traités par des moyens 300 de calcul qui comprennent une unité 310 de calcul, selon une méthode de moindres carrés par exemple, des coordonnées xo, yo du centre du cercle de diamètre connu (rayon apparent R de la terre) passant au mieux par lesdits points de transition.

On peut améliorer la précision de ce résultat en éliminant les points détectés par erreur. Ceci est effectué par les moyens 320, 330 de discrimination qui sont constitués d'un module 320 de calcul de la distance d'un point de transition retenu au centre du cercle précédemment déterminé, et d'un module 330 de comparaison qui supprime les points dont la distance au centre C calculé est sensiblement différente du rayon R du disque terrestre. Un nouveau calcul des coordonnées du centre est ensuite effectué après élimination des points aberrants.

## Revendications

1. Senseur (100) d'horizon terrestre utilisant des éléments photosensibles à transfert de charges pour détecter les transitions entre la Terre et l'espace sur une image (120) mettant en oeuvre, dans le domaine allant du proche infrarouge à l'ultraviolet, le rayonnement solaire réfléchi par la Terre ainsi que le rayonnement solaire diffusé par l'atmosphère terrestre, caractérisé en ce que, lesdits éléments photosensibles à transfert de charges étant constitués en une matrice bidimensionnelle (130) de détecteurs élémentaires, des moyens (200) de lecture déterminent les coordonnées (xi,yi) des détecteurs élémentaires situés auxdites transitions Terre-espace, en ce que lesdits moyens (200) de lecture disposent de moyens (230) de masquage pour éliminer les signaux provenant des détecteurs élémentaires contenus dans une sous-matrice (231) entourant l'image du soleil lorsque celle-ci se forme sur la matrice (130) de détecteurs élémentaires, et en ce que des moyens (300) de calcul en déduisent la position (xo,yo) du centre de la Terre dans le référentiel de la matrice (130).

2. Senseur selon la revendication 1, caractérisé en ce que lesdits moyens (300) de calcul disposent de moyens (320,330) de discrimination pour éliminer les détecteurs élémentaires retenus dont la distance au centre de Terre calculé est sensiblement différent du rayon du disque terrestre.

3. Senseur selon la revendication 1 ou 2, caractérisé en ce que lesdits moyens (200) de lecture comprennent un circuit (210) de comparaison à deux tensions S1 et S2 de référence ou seuils, qui ne retient les coordonnées xi, yi d'un élément photosensible donné que si le signal correspondant est compris entre les seuils S1 et S2.

4. Senseur selon la revendication 3, caractérisé en ce que lesdits seuils S1 et S2 sont adaptatifs et adaptables aux conditions extrêmes d'illumination résultant des différentes configurations possibles entre la Terre, le Soleil et l'engin spatial support dudit senseur.

## Patentansprüche

1. Erdhorizontsensor (100), der photoempfindliche Ladungsverschiebe-Elemente verwendet, um Übergänge zwischen der Erde und dem Weltraum auf einem Bild (120) zu entdecken, wobei im Bereich vom nahen Infrarot bis zum Ultraviolett die von der Erde reflektierte Sonnenstrahlung sowie die in der Erdatmosphäre gestreute Sonnenstrahlung genutzt wird, dadurch gekennzeichnet, daß, während die genannten photoempfindlichen Ladungsverschiebe-Elemente als zweidimensionale Matrix (130) aus Elementardetektoren ausgeführt sind, Auslesemittel (200) die Koordinaten (xi, yi) der auf diesen Übergängen Erde-Weltraum liegenden Elementardetektoren bestimmen, daß die genannten Auslesemittel (200) über Maskierungsmittel (230) zum Beseitigen der aus Elementardetektoren, die in einer das Bild der Sonne umgebenden Untermatrix (231) enthalten sind, stammenden Signale verfügen, wenn dieses Bild sich auf der Matrix (130) der Elementardetektoren bildet und daß Berechnungsmittel (300) daraus die Position (xo, yo) des Erdmittelpunkts im Bezugssystem der Matrix (130) ableiten.

2. Sensor nach Anspruch 1, dadurch gekennzeichnet, daß die genannten Berechnungsmittel (300) über Diskriminationsmittel (320, 330) zur Beseitigung der festgehaltenen Elementardetektoren verfügen, deren Abstand zum berechneten Erdmittelpunkt sich wesentlich vom Radius der Erdscheibe unterscheidet.

3. Sensor nach Anspruch 1 oder 2, dadurch gekennzeichnet, daß die genannten Auslesemittel (200) eine Schaltung (210) zum Vergleich zweier Bezugs- oder Schwellenspannungen S1 und S2 umfassen, die die Koordinaten xi, yi eines gegebenen photoempfindlichen Elementes nur festhält, wenn das entsprechende Signal zwischen den Schwellen S1 und S2 liegt.

4. Sensor nach Anspruch 3, dadurch gekennzeichnet, daß die genannten Schwellen S1 und S2 anpaßbar sind, und an extreme Beleuchtungsbedingungen angepaßt werden können, die sich aus den verschiedenen möglichen Anordnungen zwischen der Erde, der Sonne und dem den Sensor tragenden Raumflugkörper ergeben.

## Claims

1. An earth-horizon sensor (100) using photosensitive charge transfer elements for detecting the transitions between the earth and the space in an image (120) using, in the range from near infrared to ultraviolet, the solar radiation reflected by the earth as well as the solar radiation diffused by the earth's atmosphere, characterized in that, with said photosensitive charge transfer elements being constituted by a bidimensional matrix (130) of elementary detectors, read means (200) determine the coordinates (xi, yi) of the elementary detectors situated at said earth-space transitions, in that said read means (200) have shielding means (230) for eliminating the signals from the elementary detectors incorporated in a sub-matrix (231) surrounding the solar image when this image is formed on the matrix 130 of elementary detectors, and in that computation means (300) deduce the position (xo, yo) of the centre of the earth in the reference frame of the matrix (130).

2. A sensor as claimed in Claim 1, characterized in that said computation means (300) have discrimination means (320, 330) for eliminating the retained elementary detectors whose distance to the computed centre of the earth is considerably different from the radius of the earth disc.

3. A sensor as claimed in Claim 1 or 2, characterized in that said read means (200) comprise a circuit (210) for comparing two reference voltages or thresholds S1 and S2, which circuit only retains the coordinates xi, yi of a given photosensitive element if the corresponding signal is between the thresholds S1 and S2.

4. A sensor as claimed in Claim 3, characterized in that said thresholds S1 and S2 are adaptive and adaptable to extreme conditions of illumination resulting from the different possible configurations of the earth, the sun and the spacecraft supporting said sensor.
